(19) Europäisches Patentamt

European Patent Office

Office européen des brevets

(11) Publication number: **0 507 486 A1**

## (12) EUROPEAN PATENT APPLICATION

(21) Application number: **92302504.3**

(22) Date of filing: **24.03.92**

(51) Int. Cl.5: **B60J 7/08**

(30) Priority: **03.04.91 GB 9106973**

(43) Date of publication of application:
**07.10.92 Bulletin 92/41**

(84) Designated Contracting States:
**DE FR GB**

(71) Applicant: **Britax Weathershields Limited**
**180 Sherlock Street**

**Birmingham B5 7EH(GB)**

(72) Inventor: **Cunningham, Douglas James**
**42 Viking Way**
**Horndean, Portsmouth, Hampshire(GB)**

(74) Representative: **Hollinghurst, Antony**
**Britax Limited Patent Department**
**Chichester West Sussex PO19 2AO(GB)**

(54) **Vehicle opening roof.**

(57) An opening roof for a motor vehicle has a panel (12) adapted to close an opening in a vehicle roof (10) which is hinged along its front edge so that its rear edge can be raised. A first lever (30) connected at one end by a first pivot joint (28) to the rear edge of the panel (12) and connected at a second end by a second pivot joint (32) to a first end of a second lever (36), the second end of which is connected by a third pivot joint (38) to the vehicle roof opening adjacent to its rear edge. A toothed segment (26) is mounted fast with the panel (12) and coaxial with the axis of the first pivot joint (28), a first pinion (34) is mounted in engagement with the toothed segment (26) for rotation about the axis of the second pivot joint (32) and a second pinion (42) is mounted in engagement with the first pinion (34) for rotation about the axis of the third pivot joint (38). An electric motor (46) is arranged to drive the second pinion (42).

Fig.2.

EP 0 507 486 A1

This invention relates to an opening roof for a motor vehicle of the type in which a panel adapted to close an opening in a vehicle roof is hinged along its front edge and has means for raising and lowering its rear edge comprising a first lever connected at one end by a first pivot joint to the rear edge of the panel and connected at a second end by a second pivot joint to a first end of a second lever, the second end of which is connected by a third pivot joint to the vehicle roof opening adjacent to its rear edge, and drive means for causing angular movement of the levers about their respective pivot joints.

An opening roof of this type is disclosed in FR-A-2614848 where a toothed segment is mounted fast with the second lever so as to be coaxial with the first pivot joint and drive means includes a gear wheel which engages with the toothed segment.

According to the invention, in a vehicle opening roof of the type described above, a toothed segment is mounted fast with the panel and coaxial with the axis of the first pivot joint, a first pinion is mounted in engagement with the toothed segment for rotation about the axis of the second pivot joint and a second pinion is mounted in engagement with the first pinion for rotation about the axis of the third pivot joint, the drive means being coupled to the second pinion.

With this arrangement, the weight of the panel is supported on the pinions and the levers need only be of sufficient strength to hold the assembly together. If the teeth of the pinions are correctly shaped, there is minimal outward force to be resisted by the levers.

Preferably the toothed segment is arranged to engage with one side of the teeth of the first pinion and the second pinion is arranged to engage with the other side of the teeth of the first pinion so that, when the panel is in its closed position, the toothed segment and the second pinion are located side by side.

An embodiment of the invention will now be described, by way of example, with reference to the accompanying drawings, in which:

Figure 1 is a perspective view of the top of the motor car fitted with an opening roof in accordance with the invention, with the panel in a partially open position;

Figure 3 is a partially broken away sectional view taken on the line 2 - 2 in Figure 1;

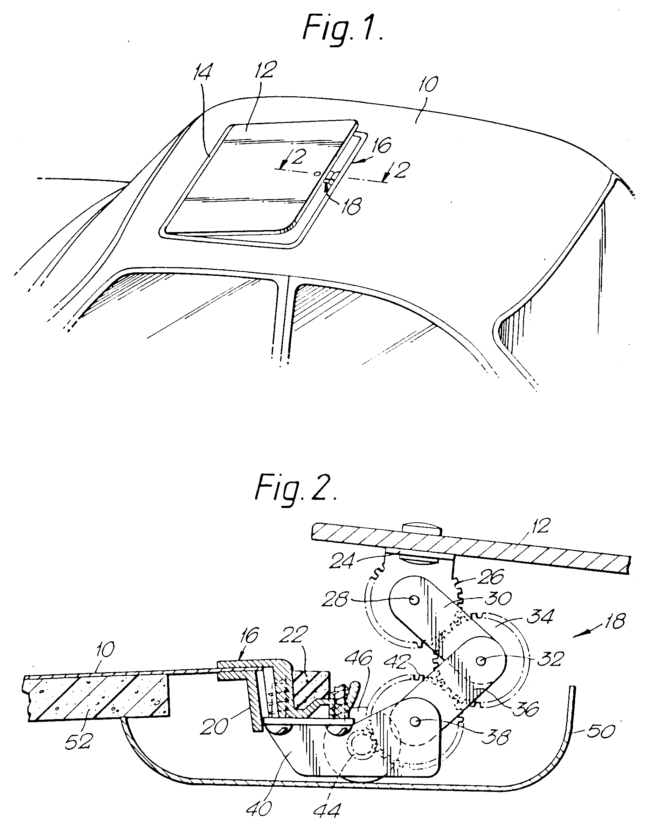

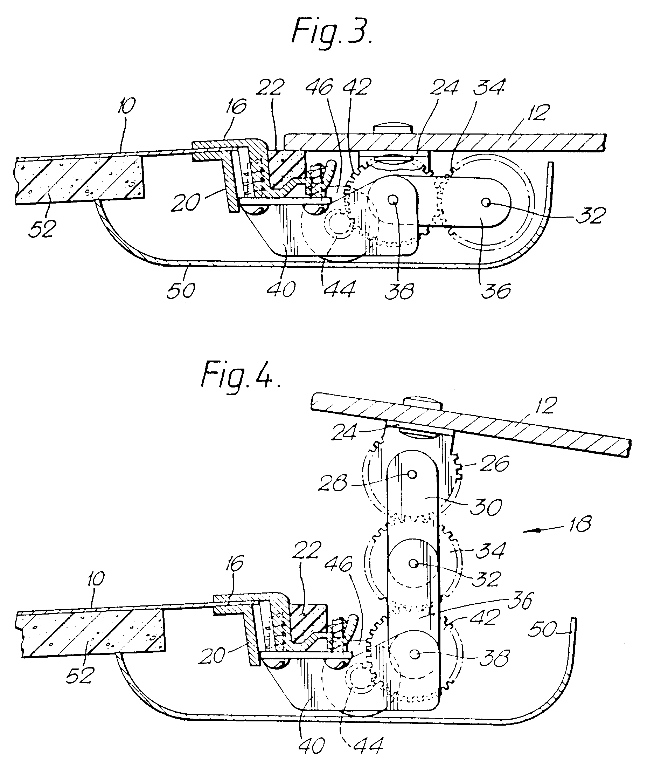

Figure 3 is a sectional view, similar to Figure 2, but with the panel in its closed position; and

Figure 4 is a sectional view, similar to Figures 2 and 3, but with the panel in its fully open position.

Referring to Figure 1, the roof 10 of a motor vehicle has an opening which is filled by a panel 12 hinged along its leading edge 14 to a frame 16 which bounds the opening. An opening mechanism 18 at the rear of the panel is arranged to hold the panel in a partially open position as illustrated. The mechanism 18 can also hold the panel in a fully closed position, in which the panel 12 is level with the vehicle roof 10, in a fully open position in which the rear edge of the panel 12 is higher than the position illustrated in Figure 1, and in a continuous range of intermediate positions. As can be seen from Figure 2, a clamping ring 20, secured to the frame 16, engages with the underside of the vehicle roof 10 so as to hold the frame 16 in firm engagement therewith. The frame 16 carries a resilient synthetic rubber seal 22 with which the panel 12 engages when in its closed position (see Figure 3).

A bracket 24, secured to the undersurface of the panel 12 near its rear edge has a downwardly depending flange with a toothed segment 26 formed thereon. A first pivot pin 28 at the centre of curvature of the segment 26 carries a first link 30 which has a second pivot pin 32 on its other end. The pivot pin 32 supports a first pinion 34, which engages with the toothed segment 26 and a second link 36. The first pinion 34 is more than twice as wide as the toothed segment 26 and is positioned axially on the second pivot pin 32 so that the side faces opposite to those visible in Figure 2 are in alignment with one another. The other end of the link 36 carries a third pivot pin 38 which engages with a bracket 40 secured to the bottom of the frame 16. The pin 38 also carries a second pinion 42 which engages with the first pinion 34. The second pinion 42 is of the same width as the toothed segment 26 and is positioned so that its side face visible in Figure 2 is in alignment with the visible side face of the first pinion 34. This allows the second pinion 42 to be located side by side with the toothed segment 26 when the panel 10 is in its fully closed position, as shown in Figure 3.

The second pinion 42 is also engaged by a third smaller pinion 44 mounted on the outward shaft of an electric motor 46 which is secured to the bracket 40. If the third pinion 44 is rotated in the clockwise direction, as viewed in Figures 2 to 4, the second pinion 42 is rotated in the counter-clockwise direction and the first pinion 34 in the clockwise direction. This causes the first link 30 to pivot round the pivot pin 28 in the counter-clockwise direction, raising the rear edge of the panel 12. The effect of the movement of the pivot pin 32 to the left during this operation is that the rate of angular movement of the link 30 about the pivot pin 28 is less than that of the pinion 42 so that some mechanical advantage is obtained. Rotation of the third pinion 44 in the counter-clockwise direction moves the panel 12 to its closed position.

The entire mechanism is enclosed above a cover 50, forming part of a trim ring which extends round the underside of the roof opening and engages with the vehicle roof trim 52. The trim ring is secured to the frame 16 by conventional means (not shown).

## Claims

1. An opening roof for a motor vehicle in which a panel (12) adapted to close an opening in a vehicle roof (10) is hinged along its front edge and has means for raising and lowering its rear edge comprising a first lever (30) connected at one end by a first pivot joint (28) to the rear edge of the panel (12) and connected at a second end by a second pivot joint (32) to a first end of a second lever (36), the second end of which is connected by a third pivot joint (38) to the vehicle roof opening adjacent to its rear edge, and drive means (46) for causing angular movement of the levers about their respective pivot joints, characterised in that a toothed segment (26) is mounted fast with the panel (12) and coaxial with the axis of the first pivot joint (28), a first pinion (34) is mounted in engagement with the toothed segment (26) for rotation about the axis of the second pivot joint (32) and a second pinion (42) is mounted in engagement with the first pinion (34) for rotation about the axis of the third pivot joint (38), the drive means (46) being coupled to the second pinion (42).

2. An opening roof according to claim 1, wherein the toothed segment (26) is arranged to engage with one side of the teeth of the first pinion (34) and the second pinion (42) is arranged to engage with the other side of the teeth of the first pinion (34) so that, when the panel (12) is in its closed position, the toothed segment (26) and the second pinion (42) are located side by side.

2. An opening roof according to claim 1, wherein the drive means comprises a third pinion (44) and an electric motor (46).

## Fig.1.

## Fig.2.

Fig.3.

Fig.4.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | GB-A-497 465 (BOYRIVEN)<br>* the whole document *<br>--- | 1 | B60J7/08 |
| A | EP-A-0 308 849 (ZANI)<br>* column 2, line 43 - column 3, line 14; figure 1 *<br>----- | 1 | |
| | | | TECHNICAL FIELDS SEARCHED (Int. Cl.5 )<br><br>B60J<br>B61D<br>E05F |

The present search report has been drawn up for all claims

| Place of search | Date of completion of the search | Examiner |
|---|---|---|
| THE HAGUE | 13 JULY 1992 | AYITER I. |

EPO FORM 1503 03.82 (P0401)